# EUROPÄISCHE PATENTSCHRIFT

(11) **EP 1 525 108 B1**
(45) Veröffentlichungstag und Bekanntmachung des Hinweises auf die Patenterteilung: **17.01.2007**
(21) Anmeldenummer: 03783980.0
(22) Anmeldetag: 14.06.2003
(51) Int. Cl.: B60J 5/04

(54) **VERBINDUNG DER RÄNDER VON GEFORMTEN BLECHEN**
CONNECTION OF THE EDGES OF FORMED SHEETS
ASSEMBLAGE DES BORDS DE TOLES FACONNEES

(30) Priorität: 03.08.2002 DE 20211948 U
(43) Veröffentlichungstag der Anmeldung: 27.04.2005
(73) Patentinhaber: ThyssenKrupp Drauz Nothelfer GmbH, 74076 Heilbronn (DE)
(72) Erfinder: LÖSCH, Alfred, 66636 Tholey Hasborn (DE)
(74) Vertreter: Dahlkamp, Heinrich-Leo
(86) Internationale Anmeldenummer: PCT/EP2003/006304
(87) Internationale Veröffentlichungsnummer: WO 2004/014680

(56) Entgegenhaltungen:
- DE-A- 3 736 938
- DE-A- 4 431 991
- DE-A- 10 031 375
- US-A1- 2001 029 702

## Beschreibung

Die Erfindung bezieht sich auf eine Verbindung der Ränder von geformten Blechen einer Tür für Kraftfahrzeuge gemäß Oberbegriff des Anspruches 1.

Türaußenblech und Türinnenblech von Kraftfahrzeugen werden üblicherweise durch Punktschweißen, Falzen und Falzklebstoff miteinander verbunden, wobei eine dauerhafte in der Regel nur durch Zerstörung oder Beschädigung des Türaußenbleches lösbare Verbindung hergestellt wird. Die gefalzten Türen werden im Rohbau in die Karosserie eingesetzt. Dies erschwert die aktuellen Konzepte zur Untervergabe von bereits lackierten und mit Aggregaten versehenen Türen. Ziel ist es daher, nach dem Lackieren von Karosserie und Türaußenhaut die getrennt aufgebaute und lackierte Innentür mit der Türaußenhaut und anschließend mit der Karosserie zu verbinden.

In der DE 100 13 868 A1 ist eine Tür eines Kraftfahrzeuges beschrieben, die ein Innenblech und eine daran befestigte, vorzugsweise lackierte Außenhaut umfasst. Zur Verbesserung der Verbindung ist dabei die Außenhaut an dem Innenblech durch Stanznieten oder andere Befestigungselemente befestigt.

Der Erfindung liegt daher die Aufgabe zu Grunde, eine lösbare Verbindung der Ränder von derartigen Blechen vorzuschlagen, bei der auf die Falztechnik verzichtet werden kann und die Verbindung ausreichend abgedichtet wird.

Die Lösung dieser Aufgabe ist im Patentanspruch 1 angegeben. Die Unteransprüche 2 bis 9 enthalten sinnvolle Ausführungsformen dazu.

Erfindungsgemäß ist vorgesehen, daß
- die Ränder der Bleche zumindest teilweise ebene Auflageflächen,
- die aufeinanderliegenden Bereiche der Ränder der Bleche nach innen und/oder zumindest in dieselbe Richtung umgebogene Leisten, Laschen und/oder Flansche,
- zur lösbaren Verbindung der beiden Bleche Schraubverbindungen und Klemmleisten oder zumindest nur Klemmleisten besitzen und
- zur lösbaren Verbindung der beiden Bleche Schraubverbindungen und Klemmleisten oder zumindest nur Klemmleisten besitzen und
- in den Bereich der ebenen Auflageflächen ein Dichtungskleber eingebracht ist.

Die Ränder der Bleche können vorzugsweise durch Abkanten hergestellt und so ausgebildet sein, daß am Umfang verteilt vorzugsweise an der Türaußenhaut, etwa rechtwinklig zur Ebene des Bleches angeordnete, Befestigungslaschen vorhanden sind, die an gegenüberliegenden Befestigungsflanschen des Innenbleches und/oder eines Verbindungsbleches zum Innenblech zusammengefügt und mit Hilfe einer Schraubverbindung lösbar verbunden werden können. Statt oder auch ergänzend zur Schraubverbindung können die Laschen und Flansche der Ränder der Bleche auch von einer u-förmigen Klemmleiste, vorzugsweise aus Kunststoff, die von außen aufgesteckt werden kann, umschlossen werden. Bei der Verwendung von Klemmleisten hat es sich als günstig erwiesen nicht nur am Umfang verteilte Laschen und Flansche an den Blechrändern zu haben, sondern umgebogene Leisten, die sich ganz oder teilweise über den Umfang der Blechränder erstrecken. Es können dann auch längere Klemmleisten verwendet werden, die vorzugsweise sich über den gesamten Umfang oder zumindest über einen Großteil des Umfanges erstrecken. Falls diese Klemmleisten eine größere Länge aufweisen, müssen sie natürlich für die Anpassung an die Konturen der Blechränder entsprechend elastisch oder gelenkig ausgeführt sein. Zur Stabilisierung der Kunststoffklemmleiste hat es sich als günstig erwiesen, wenn sie eine innere Metallseele besitzt, die die Kunststoffleiste zusätzlich auf der Verbindung hält.

Alternativ oder ergänzend zur Schraubverbindung kann auch die Klemmleiste mit einer Klipsvorrichtung in einer gemeinsamen Öffnung in den Rändern der Bleche "geklipst" bzw. festgehalten werden.

Mit der Schraubverbindung kann neben den beiden Blechrändern und gegebenenfalls auch der Kunststoffklemmleiste auch die Fugendichtung verschraubt werden. Dadurch wird mit einer einzigen Schraubverbindung sowohl das Türaußenblech mit dem Türinnenblech oder einem Verbindungsblech als auch mit der Fugendichtung verbunden. Die Fugendichtung kann aber auch in die Kunststoffklemmleiste in der Weise integriert sein, daß beide schon bei der Herstellung dauerhaft miteinander verbunden sind. Es muß dann die Fugendichtung nicht mehr direkt in die Schraubverbindung einbezogen werden.

Es hat sich schließlich auch als günstig erwiesen, die Klemmleisten so auszubilden, daß sie gleichzeitig als Abdeckleisten fungieren und sogar auch die Außendichtung selbst übernehmen. Diese Abdeckleisten können dann in geeigneter Weise am Türaußenblech z. B. federnd zur Anlage gebracht werden und sich an der anderen Seite z. B. an der Fensterscheibe oder am Schweller anlegen.

Die erfindungsgemäße Verbindung hat folgende Vorteile:
- Entfall der Falzanlage,
- Anwendbarkeit des neuen Konzeptes zur getrennten Lackierung von Türaußenhaut und Innentür,
- ein Verbindungsblech kann mit dem Türinnenblech geklebt, gelötet, geschweißt oder in sonstiger Weise fest verbunden werden, d. h. es ist keine Verschraubung erforderlich, da Verbindungsblech und Türaußenhaut lösbar miteinander verbunden werden,
- die als Einzelteil abnehmbare Außenhaut bietet eine erhöhte Reparaturfreundlichkeit und
- Fugendichtungen können in Abdeckprofile und Klemmleisten auf einfache Weise integriert werden.

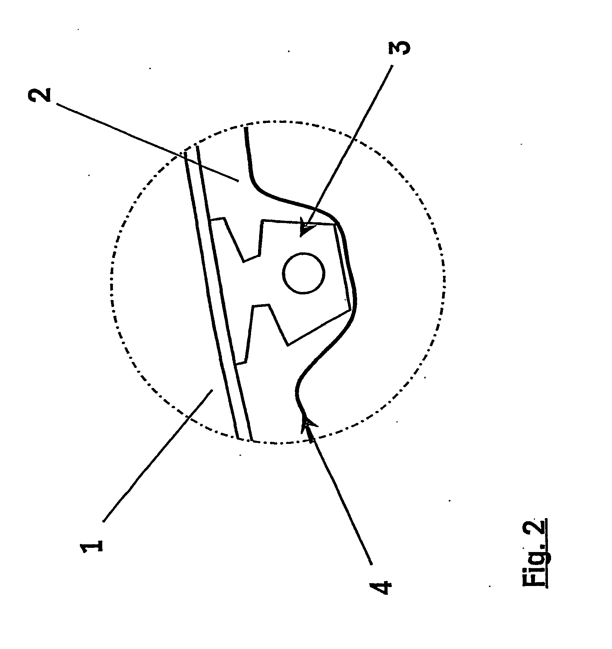

Die Erfindung wird anhand der beigefügten Fig. 1 bis 8 beispielsweise näher erläutert. Es zeigen
- Fig. 1: die Ansicht einer örtlich geschraubten Außenhaut 1 im Bereich der C-Säule eines PKW,
- Fig. 2: eine vergrößerte Einzelheit "x" zu Fig. 1,
- Fig. 3: die Randverbindung einer örtlich geschraubten Außenhaut 1 im Bereich der C-Säule,
- Fig. 4: eine Anordnung entsprechend Fig. 3 mit einer Klemmleiste 8 und in die Klemmleiste integrierter Fugendichtung 13,
- Fig. 5: eine Anordnung entsprechend Fig. 3 mit einer Klemmleiste 7 und in die Klemmleiste integrierter Fugendichtung 12 für den Bereich einer B-Säule,
- Fig. 6: eine Verbindung aus dem Bereich des Fensterschachtes mit einer Klemm-Abdeckleiste 9 mit integrierter Metallseele 15 (ohne Schraubverbindung),
- Fig. 7: eine Verbindung mit einer Klemm-Abdeckleiste 10 mit integrierter Metallseele 16 und angeformter Außendichtung 17 für den Bereich des Schwellers einer Tür und
- Fig. 8: eine Verbindung einer geklipsten Klemm-Abdeckleiste 11 mit angeformter Außendichtung 18 ebenfalls im Bereich eines Schwellers einer Tür.

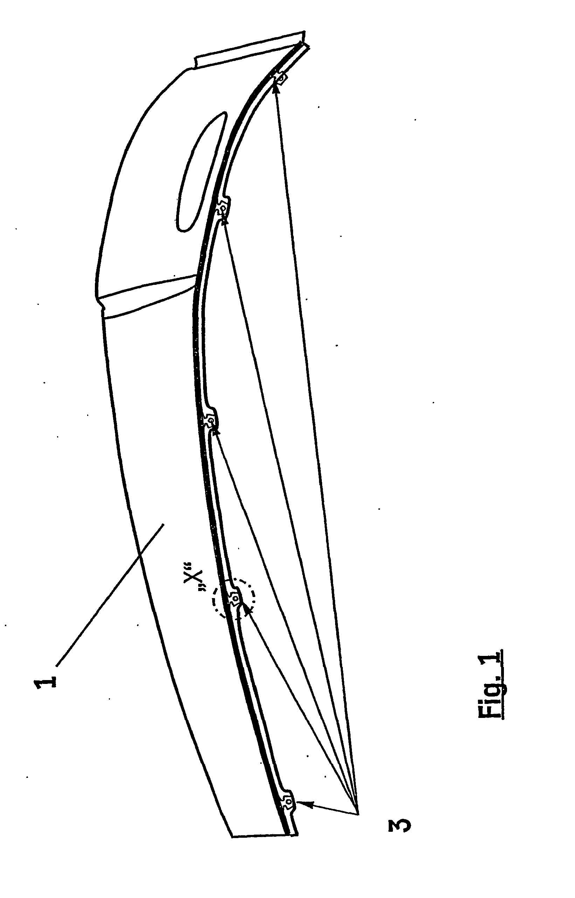

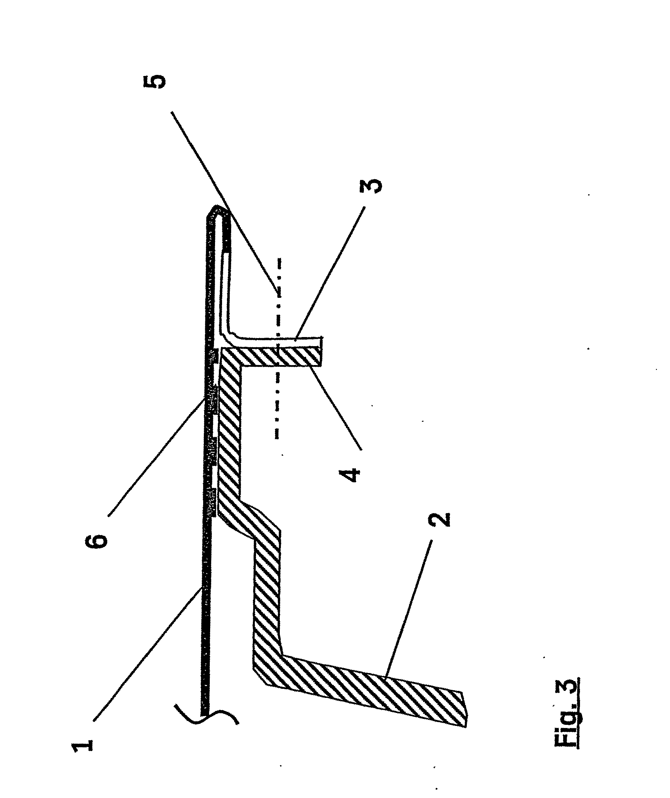

Die Fig. 1 zeigt die Anordnung verschiedener Befestigungslaschen 3 an der Türaußenhaut 1, die mit den entsprechenden Befestigungsflanschen 4 eines Verbindungsbleches 2 durch eine in Fig. 3 dargestellte Schraubverbindung 5 miteinander verbunden werden. Zur Abdichtung von Türaußenhaut 1 und Verbindungsblech 2 ist im Bereich der ebenen Auflagen ein Dichtkleber 6 eingebracht.

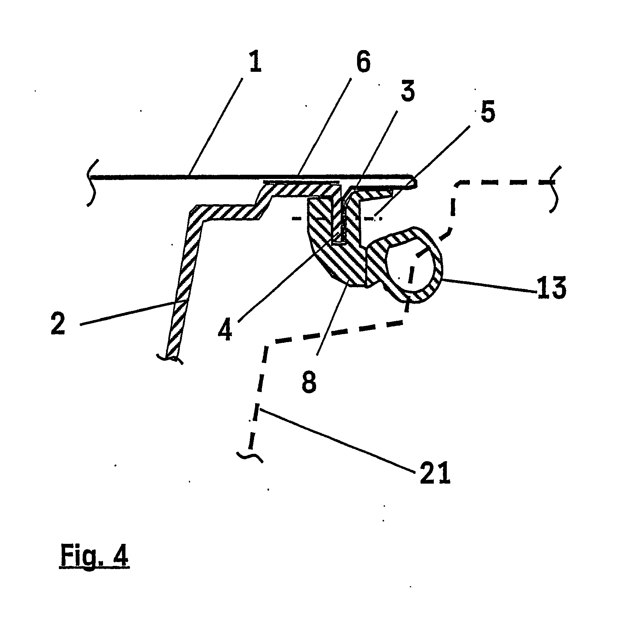

In Fig. 4 ist im Vergleich zu Fig. 3 zusätzlich eine u-förmige Klemmleiste 8 auf die umgebogenen Ränder der Bleche 1 und 2 aufgebracht und mit der Schraubverbindung 5 mit den Blechen fest verbunden. Die Fugendichtung 13 ist bereits bei der Herstellung der Kunststoffklemmleiste 8 fest mit dieser verbunden oder kann nachträglich damit verbunden werden. Mit der gestrichelten Linie 21 ist in der Fig. 4 die angrenzende Kontur der C-Säule dargestellt, an die sich die Fugendichtung 13 bei geschlossener Tür anpreßt.

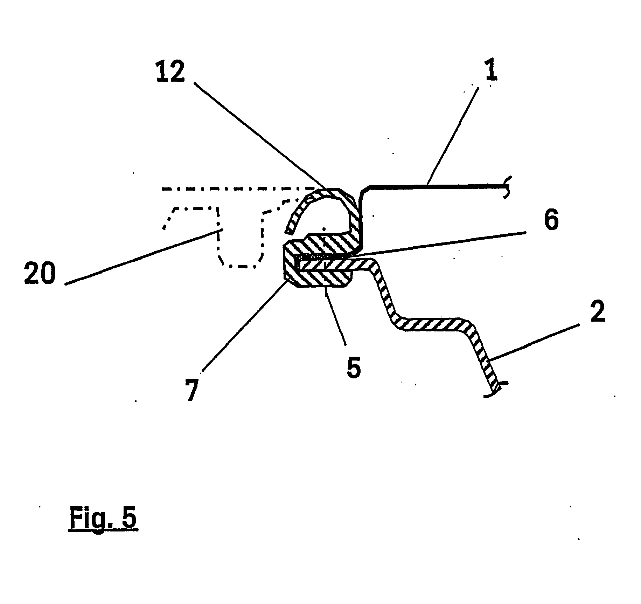

Fig. 5 zeigt mit 20 die angrenzende B-Säule, an die sich die Fugendichtung 12 anlegt. Außerdem ist in Fig. 5 die Klemmleiste 7 mit integrierter Fugendichtung 12 mit einer Schraubenverbindung 5 mit den Rändern der Bleche 1 und 2 verbunden. Zur zusätzlichen Abdichtung ist wiederum zwischen den beiden Blechen 1, 2 ein Dichtkleber 6 vorhanden.

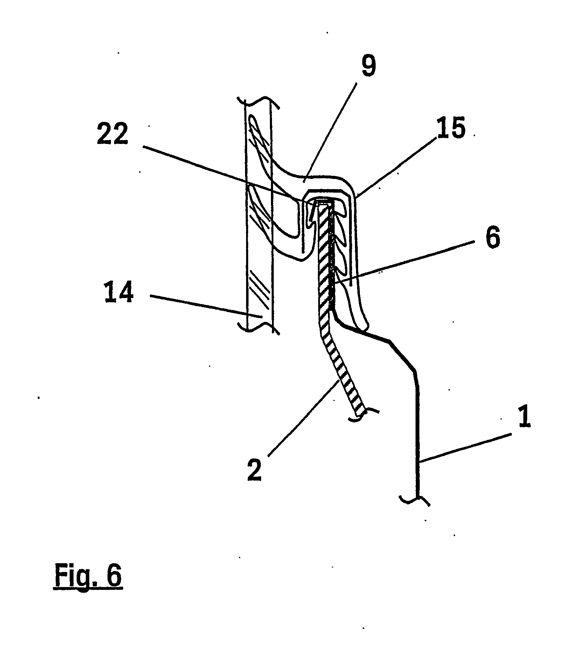

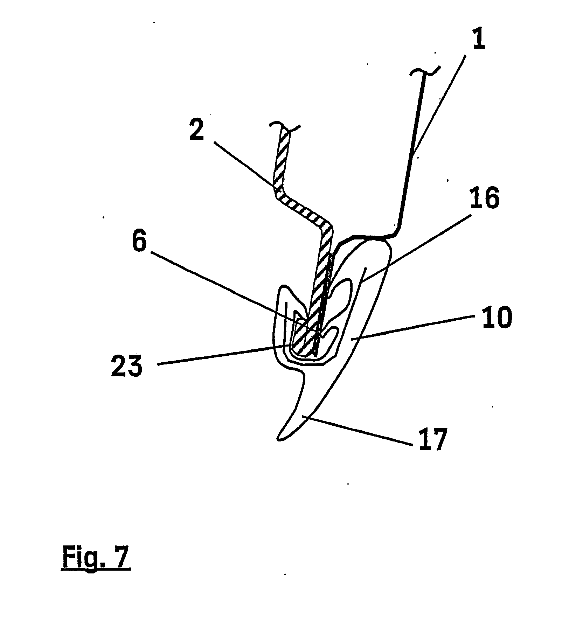

Bei den Fig. 6 bis 8 ist auf die Schraubverbindung 5 verzichtet worden. Stattdessen besitzen in den Fig. 6 und 7 die Klemmleisten 9 und 10 eine integrierte Metallseele 15, 16, mit deren Hilfe die Ränder der Bleche 1 und 2 zusammengehalten werden. Zusätzlich ist in Fig. 6 der äußere Rand des Bleches 1 so weit umgebogen, daß er den äußeren Rand des Bleches 2 geringfügig umfaßt. Gleichzeitig kann der umgebogene äußerste Rand 22 des Bleches 1 als Rückhaltesicherung für die Klemmleiste 9 dienen. In ähnlicher Weise kann der umgebogene äußere Rand 23 des Bleches 2 gemäß Fig. 7 als Rückhaltesicherung für die Klemmleiste 10 dienen. Wie aus Fig. 6 ersichtlich ist, besitzt die Klemmleiste 9 zusätzlich elastische Dichtlippen, die an der Scheibe 14 anliegen.

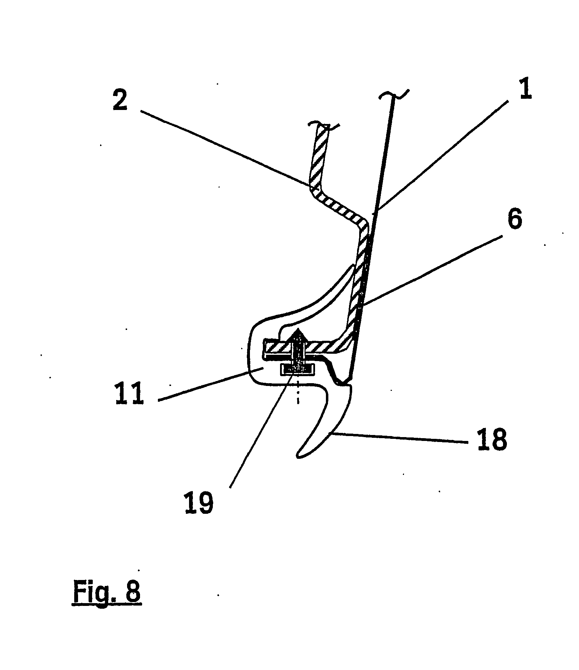

In den Fig. 7 und 8 sind an den Klemmleisten 10 und 11 Außendichtungen 17 und 18 vorhanden, die an dem nicht dargestellten Türschweller zur Anlage kommen.

Nach Fig. 8 wird die Klemmleiste 11 mit Hilfe der Klipsvorrichtung 19 an den umgebogenen Rändern der Bleche 1 und 2 gehalten, so daß auf eine Rückhaltung ähnlich den Rändern 22 und 23 nach den Fig. 6 und 7 verzichtet werden kann.

### Bezugszeichenliste:

- 1: Türaußenblech (Türaußenhaut)
- 2: Verbindungsblech
- 3: Befestigungslasche an 1
- 4: Befestigungsflansch an 2
- 5: Schraubverbindung
- 6: Dichtungskleber
- 7: Klemmleiste
- 8: Klemmleiste mit integrierter Fugendichtung 13
- 9: Klemm-Abdeckleiste mit integrierter Metallseele 15
- 10: Klemm-Abdeckleiste mit integrierter Metallseele 16 und Außendichtung 17
- 11: Klemm-Abdeckleiste mit Außendichtung 18
- 12: Fugendichtung
- 13: Fugendichtung an 8
- 14: Fensterscheibe
- 15: Metallseele in 9
- 16: Metallseele in 10
- 17: Außendichtung an 10
- 18: Außendichtung an 11
- 19: Klipsvorrichtung für 11
- 20: B-Säule
- 21: C-Säule
- 22: Rand zu 1
- 23: Rand zu 2

## Patentansprüche

1. Verbindung der Ränder eines Türaußenbleches (1) mit einem Türinnenblech und/oder mit einem Verbindungsblech (2) einer Tür für ein Kraftfahrzeug, wobei
- die Ränder der Bleche (1, 2) zumindest teilweise ebene Auflageflächen und
- die aufeinanderliegenden Bereiche der Ränder der Bleche (1, 2) nach innen und/oder zumindest in dieselbe Richtung umgebogene Leisten, Laschen (3) und/oder Flansche (4) besitzen,
**dadurch gekennzeichnet, dass**
- zur lösbaren Verbindung der beiden Bleche (1, 2) Schraubverbindungen (5) und Klemmleisten (7 - 11) oder zumindest nur Klemmleisten (7 - 11) dienen und
- in den Bereich der ebenen Auflageflächen ein Dichtungskleber (6) eingebracht ist.

2. Verbindung nach Anspruch 1, **dadurch gekennzeichnet, daß** die Klemmleisten (7 - 11) zumindest teilweise u-förmig ausgebildet sind.

3. Verbindung nach Anspruch 1 oder 2, **dadurch gekennzeichnet, daß** die Klemmleisten (7 - 11) aus Kunststoff bestehen.

4. Verbindung nach einem der Ansprüche 1 bis 3, **dadurch gekennzeichnet, daß** die Klemmleisten (9, 10) Metallseelen (15, 16) besitzen.

5. Verbindung nach mindestens einem der vorhergehenden Ansprüche, **dadurch gekennzeichnet, daß** die Klemmleisten (7 - 11) und die Ränder der zu verbindenden Bleche gemeinsam mit einer Schraubverbindung (5) und/oder mit Hilfe einer Klipsvorrichtung (19) verbunden werden.

6. Verbindung nach Anspruch 5, **dadurch gekennzeichnet, daß** auch die Fugendichtung (12) gemeinsam mit der Klemmleiste (7) und den Rändern der zu verbindenden Bleche mit einer Schraubverbindung (5) und/oder Klipsvorrichtung (19) verbunden sind.

7. Verbindung nach mindestens einem der vorhergehenden Ansprüche, **dadurch gekennzeichnet, daß** in die Klemmleiste (8) eine Fugendichtung (13) integriert ist.

8. Verbindung nach mindestens einem der vorhergehenden Ansprüche, **dadurch gekennzeichnet, daß** die Klemmleisten (9 - 11) gleichzeitig als Abdeckleisten und/oder als Außendichtung (17, 18) ausgebildet sind.

9. Verbindung nach mindestens einem der vorhergehenden Ansprüche, **dadurch gekennzeichnet, daß** die Klemmleisten (7 - 11) sich ganz oder teilweise über den Umfang der Ränder der Bleche erstrecken.

## Claims

1. A connection of the edges of a door outer sheet (1) with a door inner sheet and/or a connecting sheet (2) of a door for a motor vehicle, wherein
- the edges of said sheets (1,2) have at least partly planar contact surfaces, and
- the areas of the edges of said sheets 81,2) lying on top of each other have strips, straps (3) and/or flanges (4) bent inwardly and/or at least in the same direction,
**characterized in that**
- screw connections (5) and clamping strips (7 - 11) or at least only clamping strips (7 - 11) serve for the detachable connection of the two sheets (1, 2), and
- a sealing adhesive (6) is introduced into the area of the planar contact surfaces.

2. A connection as defined in Claim 1, **characterized in that** the clamping strips (7 - 11) are at least partly designed and built as a U-shape.

3. A connection as defined in Claim 1 or 2, **characterized in that** the clamping strips (7 - 11) are made of plastic.

4. A connection as defined in any of the preceding Claims 1 to 3, **characterized in that** the clamping strips (9, 10) have metal cores (15, 16).

5. A connection as defined at least in any one of the preceding Claims, **characterized in that** the clamping strips (7 - 11) and the edges of the sheets to be connected are jointly connected with a screw connection (5) and/or by means of a clipping device (19).

6. A connection as defined in Claim 5, **characterized in that** the joint sealing (12), too, jointly with the clamping strip (7) and the edges of the sheets to be connected are connected by means of a screw connection (5) and/or clipping device (19).

7. A connection as defined at least in any one of the preceding Claims, **characterized in that** that a joint sealing (13) is integrated into the clamping strip (8).

8. A connection as defined at least in any one of the preceding Claims, **characterized in that** that the clamping strips (9 - 11) are simultaneously designed and built as cover strips and/or outer sealing (17, 18).

9. A connection as defined at least in any one of the preceding Claims, **characterized in that** the clamping strips (7 - 11) wholly or partly extend over the circumference of the edges of said sheets.

## Revendications

1. Assemblage des bords d'une tôle extérieure de portière (1) à une tôle intérieure de portière et/ou à une tôle de raccordement (2) d'une portière pour un véhicule automobile,
- les bords des tôles (1, 2) possédant au moins en partie des surfaces d'appui planes et
- les zones superposées des bords des tôles (1, 2) possédant des listeaux repliés vers l'intérieur et/ou au moins dans le même sens, des éclisses (3) et/ou des brides (4),
**caractérisé en ce que**
- pour l'assemblage amovible des deux tôles (1, 2), on a recours à des assemblages par vis (5) et des listeaux de serrage (7 - 11) ou au moins à des listeaux de serrage (7 - 11) seulement
et
- qu'une colle d'étanchéité (6) est appliquée dans la zone des surfaces d'appui planes.

2. Assemblage selon la revendication 1, **caractérisé en ce que** les listeaux de serrage (7 - 11) sont façonnés au moins partiellement en forme de U.

3. Assemblage selon la revendication 1 ou 2, **caractérisé en ce que** les listeaux de serrage (7 - 11) sont en matière plastique.

4. Assemblage selon une des revendications 1 à 3, **caractérisé en ce que** les listeaux de serrage (9, 10) possèdent des âmes métalliques (15, 16).

5. Assemblage selon au moins une des revendications précédentes, **caractérisé en ce que** les listeaux de serrage (7 - 11) et les bords des tôles à assembler sont assemblés ensemble au moyen d'un vissage par vis (5) et/ou au moyen d'un dispositif d'agrafage (19).

6. Assemblage selon la revendication 5, **caractérisé en ce que** la garniture de joint (12) est également assemblée avec le listeau de serrage (7) aux bords des tôles à assembler au moyen d'un assemblage par vis (5) et/ou d'un dispositif d'agrafage (19).

7. Assemblage selon au moins une des revendications précédentes, **caractérisé en ce qu'**une garniture de joint (13) est intégrée dans le listeau de serrage (8).

8. Assemblage selon au moins une des revendications précédentes, **caractérisé en ce que** les listeaux de serrage (9 - 11) servent en même temps de listeaux de recouvrement et/ou sont façonnés sous forme de garniture de joint extérieure (17, 18).

9. Assemblage selon au moins une des revendications précédentes, **caractérisé en ce que** les listeaux de serrage (7 - 11) se déploient entièrement ou en partie sur le pourtour des bords des tôles.
